# EUROPEAN PATENT APPLICATION

(11) **EP 1 701 398 A1**
(43) Date of publication of application: **13.09.2006**
(21) Application number: 06110877.5
(22) Date of filing: 09.03.2006
(51) Int. Cl.: H01M 2/02, H01M 2/06, H01M 2/30, H01M 2/08, H01M 10/04

(54) **Rechargeable battery and method of assembling for the same**

(30) Priority: 09.03.2005 KR 2005019836
(71) Applicant: Samsung SDI Co., Ltd., Suwon-si Gyeonggi-do (KR)
(72) Inventor: Cho, Sung Jae, Gyeonggi-do (KR); Jung, Sang Sok, Gyeonggi-do (KR)
(74) Representative: Hengelhaupt, Jürgen

(57) **Abstract**

The invention relates to a rechargeable battery and a method of assembling the rechargeable battery. The method includes the steps of: accommodating an electrode assembly (250) into a case (200), the electrode assembly having first (215) and second electrode tabs (225) protruding therefrom; forcibly inserting an electrode terminal (130) into an insulating gasket (120), the insulating gasket having an inner diameter (B) smaller than an outer diameter (A) of the electrode terminal; forcibly inserting the insulating gasket into a terminal hole (111) in a cap plate (110) of a cap assembly (100); and sealing the case with the cap assembly. Accordingly, it is possible to increase a sealing force between the case and the cap assembly and effectively insulate the electrode terminal from the cap plate.

## Description

### BACKGROUND OF THE INVENTION

### 1. Field of the invention

The present invention relates to a rechargeable battery, and, more particularly, to a rechargeable battery having a cap assembly covering a case accommodating an electrode assembly.

### 2. Description of Related Art

Recently, a large number of compact and lightweight electric or electronic apparatuses such as cellular phones, notebooks, and camcorders have been actively developed and produced. These portable electric or electronic apparatuses are provided with battery packs, so that these apparatuses can operate without separate power supplies. A battery pack includes at least one battery for outputting a voltage having a predetermined level to drive a portable electric or electronic apparatus for a predetermined time.

Recently, for economical efficiency reasons, a battery pack has employed a rechargeable battery. A nickel cadmium (Ni-Cd) battery, a nickel hydride (Ni-MH) battery, and a lithium rechargeable battery, such as a lithium (Li) polymer battery and a Lithium ion (Li-ion) battery, are all representative examples of rechargeable batteries.

Particularly, the lithium rechargeable battery has an operating voltage of 3.6V, which is three times higher than that of the Ni-Cd battery or the Ni-MH battery. In addition, the lithium rechargeable battery has a high energy density per unit weight. Therefore, the demands for the lithium rechargeable battery have been rapidly increased.

For the lithium rechargeable battery, a lithium-based oxide is used as a positive electrode active material, and carbon is used as a negative electrode active material. In general, batteries are classified into a liquid electrolyte battery and a polymer electrolyte battery according to a type of the electrolyte. The lithium rechargeable battery using the liquid electrolyte is referred to as a lithium ion battery, and the lithium rechargeable battery using the polymer electrolyte is referred to as a lithium polymer battery. The lithium rechargeable batteries are manufactured in various shapes. According to the shapes, the lithium rechargeable batteries are classified into a can-type battery, a prismatic battery, and a pouch-type battery.

In general, a lithium rechargeable battery is constructed with a case, a jelly-roll-type electrode assembly accommodated into the case, and a cap assembly covering the upper portion of the case.

The electrode assembly is constructed by rolling a positive electrode plate coated with a positive electrode active material, a negative electrode plate coated with a negative electrode active material, and a separator interposed between the positive and negative electrode plates to prevent short circuit between the two electrode plates and to allow only lithium ions (Li-ions) to pass through. In addition, an electrolyte solution is contained in the case to enable the lithium ions to move.

The cap assembly is engaged with the upper opening of the case where the electrode assembly is accommodated. The cap assembly includes a plate-shaped cap plate having the same size and shape as those of the opening of the case. A central portion of the cap plate is provided with a terminal hole through which an electrode terminal passes.

A tube-shaped gasket is provided to surround the outside of the electrode terminal in order to electrically insulate the electrode terminal from the cap plate. An insulating plate is disposed on a bottom surface of the cap plate, and a terminal plate connected to the electrode terminal is disposed on a bottom surface of the insulating plate.

The electrode assembly is accommodated into the case and fixed so as not to be detached. The electrolyte solution is injected into the case, and then the opening of the case is sealed with the cap assembly to form the complete lithium rechargeable battery.

In the aforementioned lithium rechargeable battery, since the electrode terminal is formed to protrude through the terminal hole formed on the cap plate, the tube-shaped gasket is inserted into the terminal hole to prevent contact between the electrode terminal and the cap plate.

However, in the conventional cap assembly, gaps may occur among the assembled portions of the electrode terminal, the gasket surrounding the electrode terminal, and the terminal hole of the cap plate.

In addition, the electrolyte solution contained in the case may leak out through the gaps of the assembled portions.

### SUMMARY OF THE INVENTION

The present invention provides a rechargeable battery having a cap assembly capable of increasing a sealing force of a cap plate, a gasket, and an electrode terminal; and/or a method of assembling the rechargeable battery.

According to a first aspect of the present invention, there is provided a method of assembling a rechargeable battery. The method includes the steps of: accommodating an electrode assembly into a case, the electrode assembly having first and second electrode taps protruding therefrom; forcibly inserting an electrode terminal into an insulating gasket, the insulating gasket having an inner diameter not greater than an outer diameter of the electrode terminal; forcibly inserting the insulating gasket into a terminal hole of a cap assembly; and sealing the case with the cap assembly.

According to a preferred embodiment of the present invention, the outer diameter of the electrode terminal is formed to be larger than the inner diameter of the insulating gasket. In addition, the inner diameter of the insulating gasket may be about 96% to 97% of the outer diameter of the electrode terminal.

In addition, the outer diameter of the insulating gasket may be formed to be larger than the inner diameter of the terminal hole. In addition, the inner diameter of the terminal hole may be about 96% to 97% of the outer diameter of the insulating gasket.

In addition, the electrode terminal may be a negative electrode.

According to a second aspect of the present invention, there is provided a rechargeable battery obtained by the above-mentioned inventive method of assembling. The rechargeable battery including: an electrode assembly having two electrodes and a separator interposed between the two electrodes to prevent short circuit between the two electrodes; a case (e.g., a can) having an opening through which the electrode assembly is accommodated; and a cap assembly covering the can, the cap assembly having a plate-shaped cap plate on which a terminal hole is formed, a tube-shaped insulating gasket inserted into the terminal hole, and an electrode terminal passing through the insulating gasket, wherein the electrode terminal is forcibly inserted into the insulating gasket, and the insulating gasket is forcibly inserted into the terminal hole of the cap plate.

### BRIEF DESCRIPTION OF THE DRAWINGS

The accompanying drawings, together with the specification, illustrate exemplary embodiments of the present invention, and, together with the description, serve to explain the principles of the present invention.

FIG. 1 is a perspective exploded view showing a rechargeable battery according to an embodiment of the present invention;

FIG. 2 is a view showing an assembling relation of parts of the rechargeable battery according to the embodiment of the present invention;

FIG. 3 is a cross-sectional view showing of the rechargeable battery according to the embodiment of the present invention; and

FIG. 4 is a flowchart showing processes of assembling the rechargeable battery according to an embodiment of the present invention.

### DETAILED DESCRIPTION

In the following detailed description, certain exemplary embodiments of the present invention are shown and described, by way of illustration. As those skilled in the art would recognize, the described exemplary embodiments may be modified in various ways, all without departing from the spirit or scope of the present invention. Accordingly, the drawings and description are to be regarded as illustrative in nature, rather than restrictive.

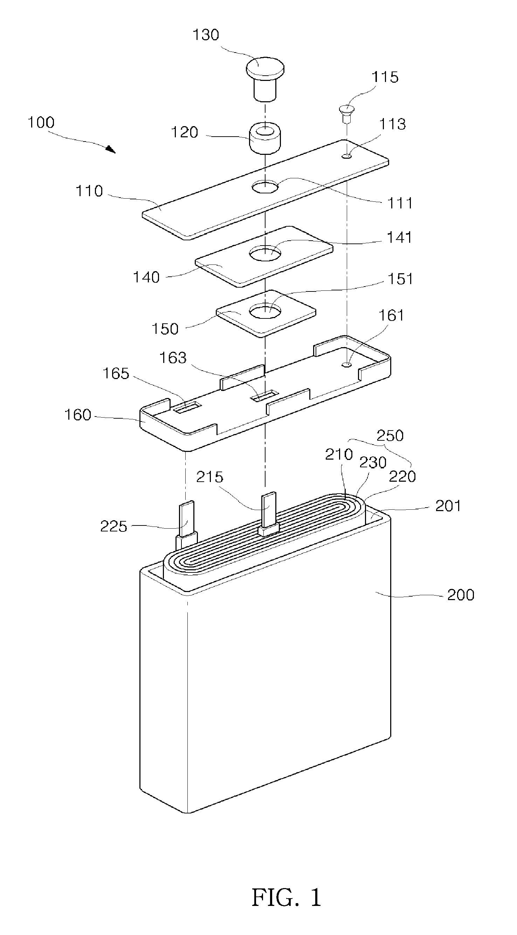

Now, a rechargeable battery according to an embodiment of the present invention will be described in more detail with reference to FIGs. 1, 2, and 3.

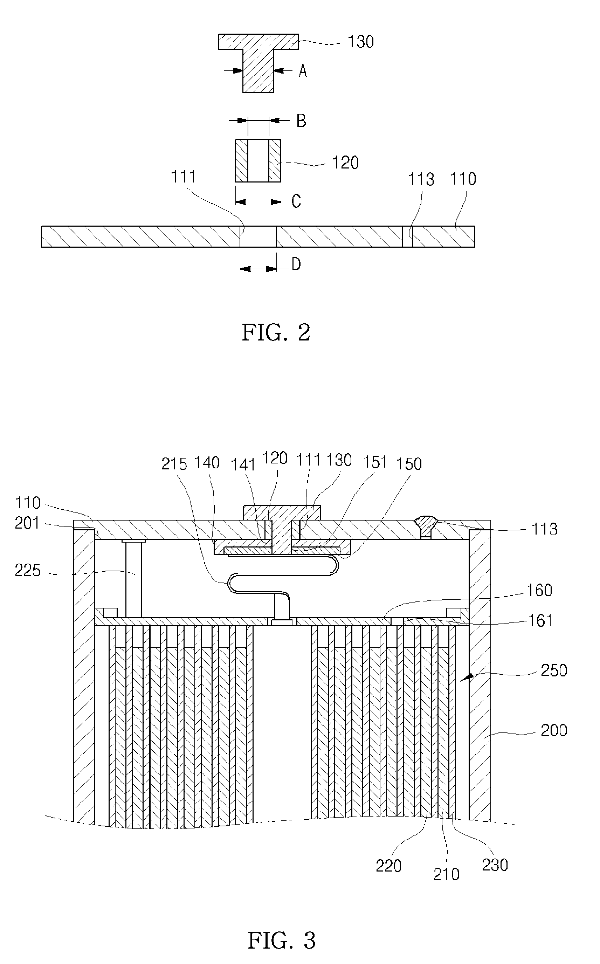

FIG. 1 is a perspective exploded view showing a rechargeable battery according to the embodiment of the present invention. FIG. 2 is a view showing an assembling relation of parts of the rechargeable battery according to the embodiment of the present invention. FIG. 3 is a cross-sectional view showing of the rechargeable battery according to the embodiment of the present invention. As shown in FiGs. 1 to 3, the rechargeable battery includes a case 200 having an opening 201 at one side thereof, an electrode assembly 250 which is accommodated into the case 200, and a cap assembly 100 which is engaged with the opening 201 to seal an upper portion of the case 200.

In the embodiment, the case 200 has a shape of a rectangular box and is made of aluminum or an aluminum alloy. The electrode assembly 250 and an electrolyte solution are accommodated into the case 200 through the opening 201 thereof. The case 200 may also function as one of a first electrode 210 and a second electrode 220.

The electrode assembly 250 is formed to have a shape of a thin plate or a film. In order to form the electrode assembly 250, a stacked structure is first constructed by stacking the first electrode 210 connected to a first electrode tap 215, a separator 230, and the second electrode 220 connected to a second tap 225, and then the stacked structure is rolled into a shape of a roll. The first electrode 210 or the second electrode 220 may be one of a positive electrode or a negative electrode. In one embodiment, the first electrode 210 is the negative electrode.

The negative electrode includes a negative current collector constructed with a conductive metal thin film such as a copper foil and negative active material layers coated on both sides thereof. The negative active material layers are substantially made of carbon. In the negative electrode, a negative electrode tap is disposed in a plate region of the negative current collector where the negative electrode active material layers are not formed, and the negative electrode tap protrudes upwardly.

The positive electrode includes a positive current collector constructed with a highly conductive metal thin film such as an aluminum foil and positive electrode material active layers coated on both side thereof. The positive electrode material active layers are substantially made of a lithium oxide. In the positive electrode, a positive electrode tap is electrically connected to a plate region of the positive current collector where the positive electrode active material layers are not formed, and the positive electrode tap protrudes upwardly.

The separator 230 is made of polyethylene, polypropylene, or a co-polymer thereof. The separator 230 has a width wider than those of the first and second electrodes 210 and 220 in order to effectively prevent short circuit between the two electrodes 210 and 220 (or the two electrode plates).

The cap assembly 100 covers the opening 201 of the case 200 to seal the case 200. The cap assembly 100 is provided with a plate-shaped cap plate 110 having the same size and shape as those of the opening 201 of the case 200. A bottom surface of the cap plate 110 is provided with an insulating plate 140. The insulating plate 140 is provided with a terminal plate 150 which is electrically connected to the first electrode tap 215 disposed on the first electrode 210.

A central portion of the cap plate 110 is provided with a first terminal hole 111 through which an electrode terminal 130 passes to connect to the first electrode tap 215. The first terminal hole 111 is provided with an insulating gasket 120 having a shape of a tube in order to electrically insulate the electrode terminal 130 from the cap plate 110.

An outer diameter A of the electrode terminal 130 inserted into the insulating gasket 120 is formed to be larger than an inner diameter B of the insulating gasket 120. In one embodiment, the inner diameter B of the insulating gasket 120 is about 96% to 97% of the outer diameter A of the electrode terminal 130.

In addition, an inner diameter D of the first terminal hole 111 is formed to be smaller than an outer diameter C of the insulating gasket 120. In one embodiment, the inner diameter D of the first terminal hole 111 is about 96% to 97% of the outer diameter C of the insulating gasket 120.

For example, in one embodiment, if the outer diameter A of the electrode terminal 130 is Φ1.25, the inner diameter B of the insulating gasket 120 is Φ1.2, which is smaller than Φ1.25. Also, in one embodiment, if the outer diameter C of the insulating gasket 120 is Φ1.5, inner diameter D of the first terminal hole 111 is Φ1.45, which is smaller than Φ1.5.

Therefore, the electrode terminal 130 can be forcibly inserted (or can be pressure fitted) into the insulating gasket 120, and the insulating gasket 120 into which the electrode terminal 130 is inserted can be forcibly inserted (or can be pressure fitted) into the first terminal hole 111 of the cap plate 110.

Here, the aforementioned sizes of the gasket, the terminal hole, and the electrode terminal are value set before the assembling of the cap plate, the gasket, and the electrode terminal. That is, the aforementioned sizes thereof are values before the deformation thereof. Therefore, the inner diameter of the gasket is set to be equal to or less than the outer diameter of the electrode terminal, and the inner diameter of the terminal hole is set to be equal to or less than the outer diameter of the gasket.

The insulating gasket is made of a material having a mechanical strength, a sealing property, and a chemical resistance to an electrolyte solution. For example, the material includes a fluorinate resin such as perfluoroalkoxy (PFA) and a fluorinate ethylene propylene (FEP) copolymer, and a crystalline polymer resin such as polypropylene (PP) and polyethylene terephthalate (PET).

In addition, an electrolyte solution injection hole 113 having a predetermined size is provided at around one side of the cap plate 110. After the cap assembly 100 is engaged with the opening 201 of the case 220, an electrolyte solution is injected through the electrolyte solution injection hole 113. After that, the electrolyte solution injection hole 113 is blocked (or clogged) with a stopper 115.

The insulating plate 140 made of an insulating material is disposed on a bottom surface of the cap plate 110. The insulating plate 140 is provided with a second terminal hole 141. The second terminal hole 141 is formed to correspond to the first terminal hole 111 of the cap plate 110 and is connected to the first terminal hole 111.

The terminal plate 150 is made of Ni or a Ni alloy. The terminal plate 150 is disposed on a bottom surface of the insulating plate 140. The terminal plate 150 is provided with a third terminal hole 151. The third terminal hole 151 is formed to correspond to the first terminal hole 111.

An insulating case 160 is disposed over the upper portion of the electrode assembly 250 to insulate the electrode assembly 250 from the cap plate 110. The insulating case 160 is made of an insulating polymer resin. In one embodiment, the insulating case 160 is made of polypropylene. However, the present invention is not limited thereto.

The insulating case 160 is provided with first and second electrode tap insert holes 163 and 165 through which the first and second electrode taps 215 and 225 protruding upwardly from the electrode assembly 250 pass and an electrolyte solution injection hole 161 through which the electrolyte solution injected through the electrolyte solution injection hole 113 of the cap plate 110 is injected.

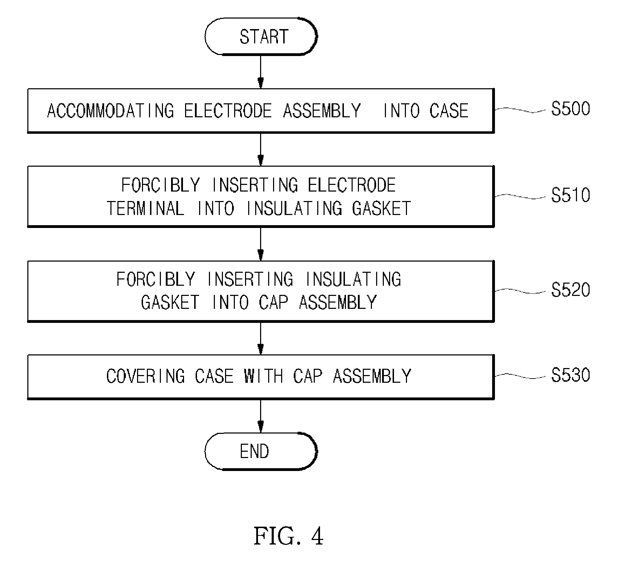

Now, processes of assembling the aforementioned rechargeable battery according to an embodiment of the present invention will be described in more detail with reference to FIG. 4.

Firstly, the electrode assembly 250 constructed by rolling the first and second electrodes 210 and 220 and the separator 230 (into the shape of the roll) is accommodated into the case 220 (S500).

Next, the electrode terminal 130 is inserted into the tube-shaped insulating gasket 120. The inner diameter B of the insulating gasket 120 is formed to be about 96% to 97% of the outer diameter A of the electrode terminal 130. In one embodiment, since the outer diameter A of the electrode terminal 130 is formed to be larger than the inner diameter B of the insulating gasket 120, the electrode terminal 103 is forcibly inserted into the insulating gasket 120 by rotating and pressing the electrode terminal 130 (S510)

Next, the insulating gasket 120 into which the electrode terminal 130 is forcibly inserted is inserted into the first terminal hole 111 of the cap plate 110. The inner diameter D of the first terminal hole 111 is about 96% to 97% of the outer diameter C of the insulating gasket 120. In one embodiment, since the outer diameter of the insulating gasket 120 is formed to be larger than the inner diameter D of the first terminal hole 111, the insulating gasket 120 is forcibly inserted into the cap plate 110 by rotating and pressing the insulating gasket 120 similar to the electrode terminal 130 (S520)

Next, the insulating plate 140 and the terminal plate 150 are sequentially disposed on the bottom surface of the cap plate 110. The electrode terminal 130 forcibly inserted into the first terminal hole 111 is sequentially inserted into the second terminal hole 141 of the insulating plate 140 and the third terminal hole 151 of the terminal plate 150.

Since the electrode terminal 130 is insulated from the cap plate 110 by the insulating gasket 120 and engaged with the first terminal hole 111 of the cap plate 110, the terminal plate 150 is electrically insulated from the cap plate 110 and electrically connected to the electrode terminal 130.

Next, the insulating case 160 is disposed over the upper portion of the electrode assembly 250 to electrically insulate the electrode assembly 250 from the cap assembly 100 and to cover the upper portion of the electrode assembly 250. The first and second electrode taps 215 and 225 protrude through the first and second electrode tap insert holes 163 and 165 of the insulating case 160.

Next, the cap assembly 100 is disposed on the opening 201 of the case 200. The first electrode tap 215 is connected to the terminal plate 150 of the electrode terminal 130, and the second electrode tap 225 is connected to the cap plate 110.

According to the present invention, in a cap assembly of a rechargeable battery, an electrode terminal and an insulating gasket are forcibly inserted into a cap plate, thereby increasing a sealing force between a case and the cap assembly and effectively insulate the electrode terminal from the cap plate.

## Claims

1. A method of assembling a rechargeable battery, the method comprising:
accommodating an electrode assembly into a case, the electrode assembly having first and second electrode taps protruding therefrom;
forcibly inserting an electrode terminal into an insulating gasket, the insulating gasket having an inner diameter smaller than an outer diameter of the electrode terminal;
forcibly inserting the insulating gasket into a terminal hole of a cap assembly; and
sealing the case with the cap assembly.

2. The method according to claim 1, wherein the inner diameter of the insulating gasket is about 96% to 97% of the outer diameter of the electrode terminal.

3. The method according to claim 1, wherein the outer diameter of the insulating gasket is formed to be larger than the inner diameter of the terminal hole.

4. The method according to claim 3, wherein the inner diameter of the terminal hole is about 96% to 97% of the outer diameter of the insulating gasket.

5. The method according to claim 1, wherein the electrode terminal is a negative electrode.

6. The method according to claim 1, wherein the insulating gasket is made of at least one of a perfluoroalkoxy (PFA), a fluorinate ethylene propylene (FEP) copolymer, a polypropylene (PP), or a polyethylene terephthalate (PET).

7. A rechargeable battery obtained by a method according to any of the claims 1 to 6.
